Europäisches Patentamt

European Patent Office

Office européen des brevets

(19)

(11) **EP 0 418 949 B1**

(12) **EUROPEAN PATENT SPECIFICATION**

(45) Date of publication and mention
of the grant of the patent:
**23.04.1997 Bulletin 1997/17**

(51) Int Cl.6: **G06T 9/20**

(21) Application number: **90202349.8**

(22) Date of filing: **05.09.1990**

(54) **Method of detecting an amplitude transient in a field of elements having a multivalent amplitude distribution, device suitable for performing the method, and video system including the device**

Verfahren zum Detektieren eines Amplitudensprungs in einem Elementenfeld mit mehrwertiger Amplitudenverteilung, Anordnung zur Durchführung eines derartigen Verfahrens sowie Videosystem mit einer derartigen Anordnung

Procédé de détection d'un saut d'amplitude dans un champ d'éléments ayant une répartion d'amplitude à plusieurs valeurs, dispositif de mise en oeuvre de ce procédé et système vidéo muni d'un tel dispositif

(84) Designated Contracting States:
**DE FR GB**

(30) Priority: **11.09.1989 NL 8902257**

(43) Date of publication of application:
**27.03.1991 Bulletin 1991/13**

(73) Proprietor: **Philips Electronics N.V.
5621 BA Eindhoven (NL)**

(72) Inventor: **Venema, Willem Jurrianus
NL-5656 AA Eindhoven (NL)**

(74) Representative: **Strijland, Wilfred et al
INTERNATIONAAL OCTROOIBUREAU B.V.,
Prof. Holstlaan 6
5656 AA Eindhoven (NL)**

(56) References cited:
- **IEEE TRANSACTIONS ON PATTERN ANALYSIS AND MACHINE INTELLIGENCE, vol. PAMI-9, no. 3, May 1987, pages 446-451, IEEE, New York, US; V.S. NALWA: "Edge-detector resolution improvement by image interpolation"**
- **PROCEEDINGS OF THE 8TH INTERNATIONAL CONFERENCE ON PATTERN RECOGNITION, Paris 27th - 31st October 1986, pages 374-377, IEEE, New York, US; T. KASVAND: "Step or jump edge detection by extrapolation"**

## Description

The invention relates to a method of detecting an amplitude transient in a field of elements having a multivalent amplitude distribution by comparison of amplitude values of neighbouring elements on a search curve.

The invention also relates to a device suitable for performing the method, and to a video system comprising such a device.

A method and device of this kind are known from the data sheet "Plessey PDSP 16401 2-Dimensional Edge Detector", May 1986. This sheet describes a CMOS video signal processor for determining the presence, the direction and the magnitude of a gradient of an edge in a video image by multiplying each time a block of amplitude values of 3x3 pixels with four mask matrices. It is thus investigated whether an amplitude transient occurs in the horizontal, the vertical or the diagonal direction. The directions in which a search is made are referred to as search curves. Thus, in this case a search curve is chosen in the horizontal direction, the vertical direction and the diagonal direction. Each time an amplitude transient is searched along a search curve.

It is a drawback of such a method that the determination of the location of an edge is inaccurate: an edge is detected by way of a sufficiently large amplitude difference between neighbouring pixels. For example the sum of the amplitude values of three pixels, succeeding one another transversely to the search curve is compared with a corresponding sum formed by way of pixels located two pixels further along the search curve. If the difference between these sums is greater than a threshold value, the edge is situated at the pixels located between the two relevant threesomes of pixels, i.e. with an accuracy of 1 pixel.

From an article titled "Edge Detector Resolution Improvement by Image Interpolation", by V.S.Nalwa in the IEEE transactions on pattern analysis and machine intelligence, Vol. PAMI-9 NO 3., May 1987 it is known to generate a double resolution field from the original field by interpolation of the amplitudes, prior to edge detection. By detecting the edges in the double resolution field an accuracy of half a pixel will be achieved, however at the expense of computing the interpolated amplitudes in the double resolution field.

It is inter alia an object of the invention to provide a method which enables a determination of the location of an amplitude transient which is more accurate than customarily achieved so far.

To achieve this, a method in accordance with the invention is characterized in that a location of the amplitude transient detected along the search curve is further localised by determining the location as a solution of an equation involving an expression for an interpolation of the amplitude values along the search curve as a function of the location, the equation depending on amplitude values of at least three elements situated on or along the relevant search curve. As a result of this additional calculation, for example in Machine Vision systems the dimensions and positions of objects in images can be more accurately determined. Examples in this respect are the inspection of printed circuit boards and substrates comprising Surface Mounted Devices.

One version of a method in accordance with the invention is characterized in that the equation depends on amplitude values of at least four elements situated on or along the search curve. It has been found that the accuracy is thus enhanced.

A further version of a method in accordance with the invention is characterized in that the interpolation is determined as a function of sums successively formed along the search curve, each sum relating to a fixed number of amplitude values of elements correspondingly situated near the search curve, which elements succeed one another in a direction transversely of the search curve. Even though the use of sums for the detection of an amplitude transient is known, it offers an additional advantage for the determination of an interpolation point: an even higher accuracy is achieved. Moreover, the risk of undue detection, for example due to a defect or a faulty element, is reduced.

A preferred version of a method in accordance with the invention is characterized in that the expression is a fit curve through the relevant amplitude values, the fit curve being, the equation requiring that an inflexion point of said polynomial is zero at the location. The choice of this version is based on the following considerations. In optics an edge in an image is fit as the convolution of an ideal edge and a point transfer function (see R.C. Gonzalez: "Digital Image Processing", second edition, Addison-Wesley Publishing Company, 1987, Chapter 5: Image Restoration) and resembles an arc tan function around its zero point, or also a third-order polynomial around its inflexion point. The use of an arc tan function for the fit curve introduces arithmetical problems. A third-order polynomial is much more suitable from a numerical point of view. The positioning of the amplitude transient at the area of the inflexion point in the amplitude variation of the successive elements where the amplitude transient occurs, offers an accuracy which is much better than 1 element; it has been found in practice that an accuracy of 1/10 element can be achieved.

Fig. 1 shows a field of elements having amplitude values;
Fig. 2A shows a video image containing an object;
Fig. 2B shows an amplitude profile along the line L of Fig. 2A;
Figs. 3 and 4 show a known edge detector;
Figs. 5 and 6 show an edge detector in accordance with the invention;

Fig. 7 illustrates a first feasible determination of the interpolation point;
Fig. 8 shows the determination of an inflexion as a further possibility;
Fig. 9 shows a video system in accordance with the invention.

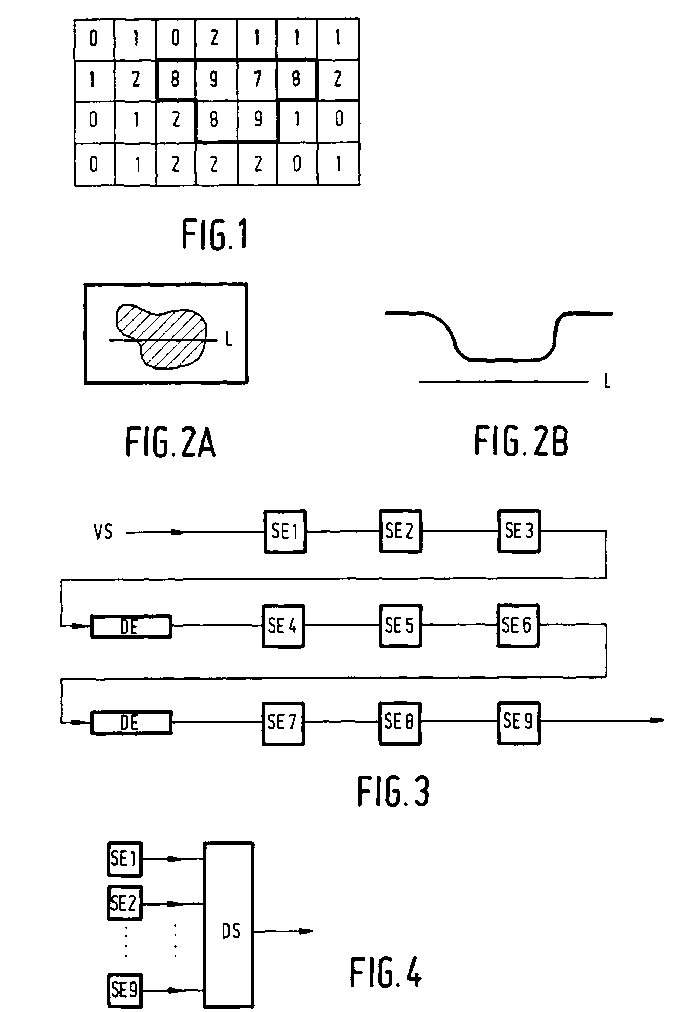

Fig. 1 shows an example of a two dimensional field of discrete elements having a multivalent amplitude distribution. The amplitude value is given for each element. When the amplitude values of two neighbouring elements deviate strongly, for example in excess of a given threshold value, say 5, an amplitude transient is concerned. As is indicated in the Figure, the field is divided into two sectors by the amplitude transients.

Fig. 2A shows a further example: a video image composed of pixels having a given grey-level. The pixels constitute the elements of the field, and the grey-levels constitute the amplitude values. The video image represents an object which is characterized by deviating grey-levels.

It is to be noted that the applications of a method or a device in accordance with the invention are not restricted to the two-dimensional fields shown. One application of a method in accordance with the invention for a one-dimensional field is, for example the localisation of a 0-1 transition in a digital signal. An application of a method in accordance with the invention for a three-dimensional field is, for example the localisation of an amplitude transient in a data field obtained by computer tomographic examination of an object.

It is also to be noted that a field to be examined and having a multivalent amplitude distribution need not necessarily be subdivided into similar elements, for example as is the case in Fig. 1. A continuous field can also be examined, provided that it can be made discrete by assignment of representative values to parts of the field.

In the case of a field which is composed as rectangular array, like in Fig. 1, it is attractive to search for amplitude transients in the horizontal and the vertical direction. The search curve or search direction is then formed by one of the main directions of the field. It will be evident that a search for amplitude transients can also be made in the diagonal direction or another direction.

If a search curve is chosen which does not extend exactly through but very close to a number of elements, these elements along the search curve can be used for determining the interpolation point.

Fig. 2B shows the amplitude profile of the video image of Fig. 2A along the line L. At the edges of the object each time an amplitude transient occurs. This transient can be detected by comparison of neighbouring pixels. Herein, the line L is the search curve.

Fig. 3 shows a part of a customary edge detector for video images. A video signal VS containing grey-levels of successive pixels in a video image, is applied to nine series-connected storage elements SE1-SE9, a delay element DE being connected between SE3 and SE4 as well as between SE6 and SE7. A video image is composed of M image lines of N pixels each. The delay elements delay N-3 pixels, so that the storage elements of the edge detector contain each time the grey-levels of a pixel and the eight neighbouring pixels surrounding the relevant pixel in the video image.

In this customary edge detector, for example in the case of a vertical search curve the grey-levels of SE1, SE2 and SE3, say GR1, GR2 and GR3, are summed in a detection circuit DS so as to be compared with the grey-levels GR7, GR8 and GR9 of SE7, SE8 and SE9 respectively. When the difference between the sums exceeds a threshold value D, an edge has been detected, see Fig. 4.

This can be expressed in the form of a formule as $|GR1+GR2+GR3-GR7-GRB-GR9| > D$, being a horizontal edge. In the detection circuit this operation is often performed simultaneously for a number of search curves or search directions. Each time the amplitude values of three elements succeeding one another transversely of the search curve are summed so as to be compared with the sum of the amplitude values of three corresponding elements situated further along the curve. For example, a horizontal search can be performed:
if $|GR1+GR4+GR7-GR3-GR6-GR9| > D$, a vertical edge has been found.

By shifting the "window" of Fig. 3 across the entire video image, all edges of objects in the video image are thus detected. Dimensions and positions of objects in images can thus be determined.

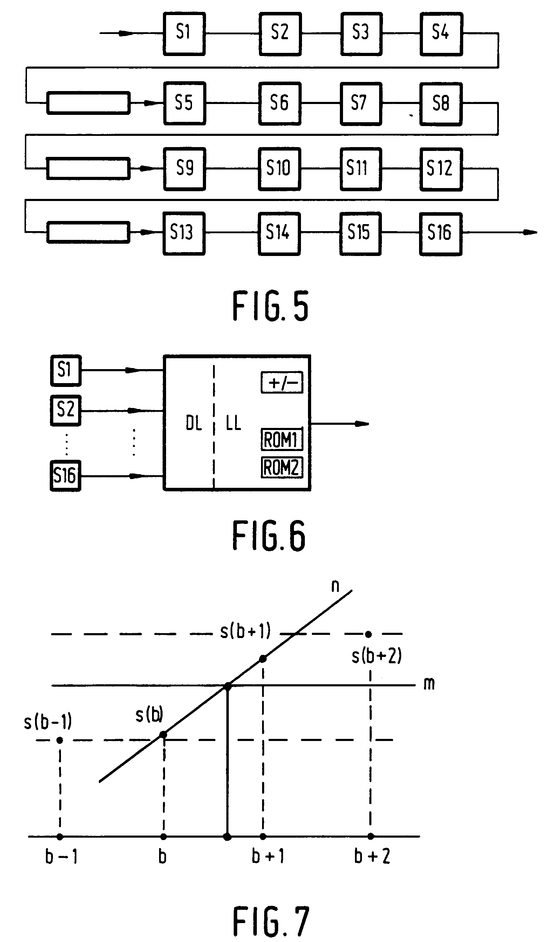

An embodiment of an edge detector in accordance with the invention is shown in Figs. 5 and 6. Sixteen storage elements S1-S16 are connected, via three delay elements which each delay N-4 pixels, so that they contain a 4x4 environment of a pixel. In the detection circuit DL it is determined whether an edge is concerned. This is performed in substantially the same way as in the customary edge detector. If the difference between the sum of the grey-levels G1 to G8, of S1 to S8, respectively, and the sum of the grey-levels G9 to G16 of S9 to S16, respectively, is greater than a threshold value T, a horizontal edge is concerned:
$|G1+G2+...+G8-G9-G10-...-G16| > T$ is the criterion.

When an edge has been detected by the detection circuit, moreover, in the location circuit LL the location of the edge is more accurately determined by calculation of an interpolation point as a function of the amplitude values of a 4x4 environment of the amplitude gradient.

This can be performed, for example, as illustrated in Fig. 7. Assume that the search direction in an image is a vertical direction and that a horizontal edge has been found. Define: $s(b-1) := G1+G2+G3+G4$, $s(b) := G5+G6+G7+G8$, $s(b+1) := G9+G10+G11+G12$, $s(b+2) := G13+G14+G15+G16$. The sums of the amplitude values formed in the horizontal direction exhibit a transient in the vertical direction. The search curve, extending vertically through the image to be examined, is situated along the x-axis in Fig. 7. The magnitude of the sums of the grey-levels is plotted along the y-axis. It holds good that: $|s(b-1)+s(b)-s(b+1)-s(b+2)| > T$.

The amplitude gradient will occur roughly between b and b+1, i.e. in the vicinity of b+1/2.

The point on the search curve which corresponds to the point of intersection of the lines m and n is chosen as the interpolation point. The line m is the horizontal line through the mean of s(b+2) and s(b-1). The line n is the connecting line between the points (b,s(b)) and (b+1,s(b+1)). The x-coordinate of the point of intersection found approximates the location of the amplitude transient. The point of intersection is calculated as follows. Using a customary horizontal x-axis and a vertical y-axis, the equations of the lines m and n are:

$$m: y = \frac{s(b+2) + s(b-1)}{2}$$

$$n: y=[s(b+1)-s(b)] * x+s(b) - b * [s(b+1)-s(b)]$$

and for the x-coordinate of the point of intersection it follows therefrom that:

$$x = \frac{s(b+2) + s(b-1) - 2*s(b)}{2 * [s(b+1) - s(b)]} + b$$

or

$$x - (b + 1/2) = \frac{s(b+2) - s(b+1) - s(b) + s(b-1)}{2 * [s(b+1) - s(b)]}$$

so that the interpolation point is: b + 1/2 + E1
where

$$E1 = \frac{1}{2} * \frac{s(b+2) - s(b+1) - s(b) + s(b-1)}{s(b+1) - s(b)}$$

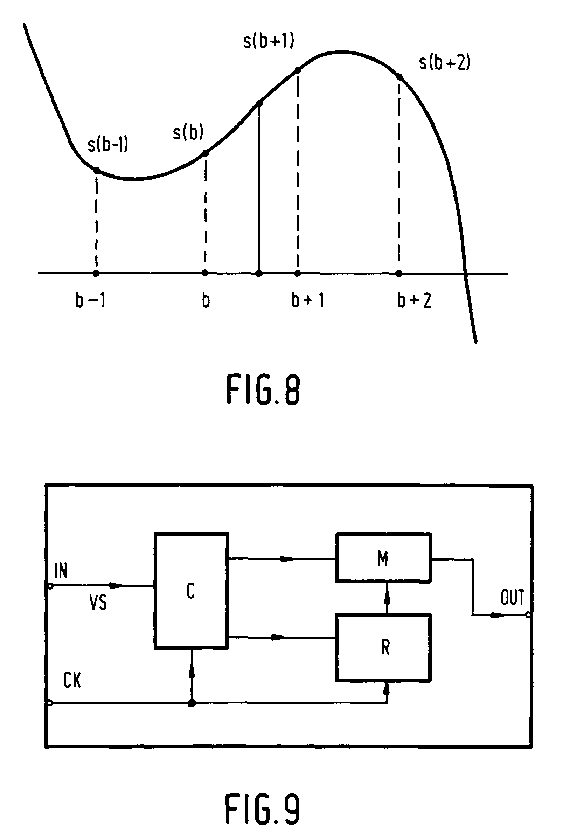

Fig. 8 illustrates a further determination of an interpolation point. Therein, use is made of a fit curve through the calculated sums (in this case a third-order polynomial). The location of the amplitude transient is approximated by calculating an inflexion point in the variation of the grey-levels along the search curve or, in this case, sums of grey-levels of each time four elements succeeding one another transversely of the search curve. The fit curve smoothly interconnects the measuring points. It has been found that the inflexion point is a very good approximation for the location of the detected amplitude transient. The calculation is based on the following. Assume that a horizontal edge has been found. Define: $s(b-1): = G1+G2+G3+G4$, $s(b): = G5+G6+G7+G8$, $s(b+1): = G9+G10+G11+G12$, $s(b+2): = G13+G14+G15+G16$.

It holds good that $|s(b-1)+s(b)-s(b+1)-s(b+2)| > T$.

The four points (b-1), s(b-1)) to (b+2, s(b+2)) determine one third-order polynomial whose coefficients can be found by substitution of the four coordinate pairs in the general function rule of a third-order polynomial:

$$p(x) = a_3 x^3 + a_2 x^2 + a_1 x + a_0$$

where

$$p(b-1) = s(b-1), ..., p(b+2) = s(b+2).$$

Substitution results in:

$$a_3 = \frac{s(b+2) - 3*s(b+1) + 3*s(b) - s(b-1)}{6}$$

and

$$a_2 = \frac{s\,(b{+}1)\,{-}2{*}s\,(b)\,{+}s\,(b{-}1)\,{-}b{*}[\,s\,(b{+}2)\,{-}3{*}s\,(b{+}1)\,{+}3{*}s\,(b)\,{-}s\,(b{-}1)\,]}{2}$$

The inflexion point searched is then determined by calculating the zero point of the second derivative function of the polynomial found:

$$p'(x)=3a_3x^2+2a_2x+a_1; \quad p''(x)=6a_3x+2a_2;$$

$$p''(x)= 0 \text{ gives } x = \frac{-a_2}{3a_3}$$

The x-coordinate of the inflexion point is then: $b +1/2 + E2$, where

$$E2 = \frac{1}{2} * \frac{-s\,(b{+}2)\,+\,s\,(b{+}1)\,+\,s\,(b)\,{-}s\,(b{-}1)}{s\,(b{+}2)\,{-}3{*}s\,(b{+}1)\,{+}3{*}s\,(b)\,{-}s\,(b{-}1)}$$

The implementation of the additions can be readily realised by way of an adder circuit. The division can be performed by means of a (programmable) read-only memory which, given an input value x, delivers an output value $1n(x)$, being the natural logarithm of x, and a (P)ROM which, given an input value y, delivers an output value $\exp(y)$, being the anti-logarithm of y. By utilising the generally valid identity:

$$p/q = \exp(1n(p)-1n(q)),$$

the division can be performed by means of comparatively small (P)ROMs, see Fig. 6.

The following is to be noted as regards the accuracy. An "ideal" amplitude transient where, for example where $s(b-1) = s(b) = 0$ and $s(b+1) = s(b+2) = \Delta$, of course, produces $E2 = 0$. Any error amounting to $\delta$ in one of the sums produces a value in the order of magnitude of $\delta/\Delta$ for E2. This deviation is small if $\delta$ is small with respect to $\Delta$.

It will be evident that fit curves can also be used in a different manner, for example by determination of the least-squares line: a line which is determined by the measuring points so that the sum of the squares of the deviations of the measuring points with respect to that line is minimum. The x coordinate associated with the y coordinate situated halfway the highest and the lowest amplitude value of the measuring points chosen is an indication of the location of the edge.

Fig.9 shows a video system. Via an input IN a video signal VS is applied to a control circuit C which apllies the grey-lines of the relevant pixels of each video image to an edge detector in accordance with the invention: R. The storage elements in R constitute a window which fully scans each video image and investigates where all searched (for example, horizontal and vertical) amplitude transients are situated. In accordance with the invention, these transients are each time more closely localised, the location being applied to a memory M, correct addressing being controlled by the control circuit C. The desired information concerning the edges in each image can be read from the memory M via output OUT. A clock CK controls C and R. In order to digitise a standard TV image in, for example 512x512 pixels, a sampling frequency in the order of magnitude of 10 MHz is required. The calculations in the detection and the location circuit can be performed using the same clock frequency by utilising known pipeline techniques. The additions, the comparison of the sums found and the divisions (using PROMs containing tables of logarithms) can be performed in the rhythm of the same (sample) clock. The desired result becomes available after a delay amounting to a few clock signals. Real time image processing is thus possible.

## Claims

1. A method of detecting the location of an amplitude transient in a field of elements representing an image, said field providing a multivalent amplitude distribution, comprising the step of

   - comparing the amplitude values of neighbouring elements on a search curve to determine a first amplitude transient location

   characterized in that

- in a second step a more precise location is determined by solving an equation involving an expression for an interpolation of the amplitude values along the search curve as a function of said first amplitude transient location, the equation depending on amplitude values of at least three elements situated on or along the relevant search curve.

2. A method as claimed in Claim 1, characterized in that the equation depends on amplitude values of at least four elements situated on or along the search curve.

3. A method as claimed in Claim 1 or 2, characterized in that the interpolation is determined as a function of sums successively formed along the search curve, each sum relating to a fixed number of amplitude values of elements correspondingly situated near the search curve, which elements succeed one another in a direction transversely of the search curve.

4. A method as claimed in any one of the Claims 1 to 3, characterized in that for the elements use is made of pixels of a two-dimensional video image, grey-levels of the pixels constituting the amplitude values.

5. A method as claimed in any one of the Claims 1 to 4, the field being formed by a rectangular array, characterized in that the search curve is chosen to extend in one of the principal directions of the field.

6. A method as claimed in any one of the Claims 1 to 5, characterized in that the expression is a fit curve through the relevant amplitude values.

7. A method as claimed in Claim 6, characterized in that for the fit curve use is made of a third-order polynomial, the equation requiring that an inflexion point of said polynomial is zero at the location.

8. A device for performing the method claimed in any one of the Claims 1 to 7, the device comprising storage elements for the storage of amplitude values of elements, which storage elements are connected to a detection circuit (DL), characterized in that the device furthermore comprises a location circuit (LL) comprising a logic circuit for calculating the location.

9. A device as claimed in Claim 8, characterized in that the logic circuit comprises an adder circuit, a first read-only memory (ROM) containing a table of logarithms, and a second ROM containing a table of anti-logarithms.

10. A video system comprising a device as claimed in Claim 8 or 9 for the repeated detection and further localisation of amplitude transients in a succession of video images, characterized in that real-time detection of transients and further localisation which localizes these transients more closely take place.

**Patentansprüche**

1. Verfahren zum Detektieren des Orts eines Amplitudensprungs in einem Feld aus Elementen, die ein Bild repräsentieren, wobei das Feld eine mehrwertige Amplitudenverteilung verschafft, mit dem Schritt des

   - Vergleichens der Amplitudenwerte benachbarter Elemente auf einer Suchkurve, zur Bestimmung eines ersten Ortes eines Amplitudensprungs,

   <u>dadurch gekennzeichnet</u>, daß

   - in einem zweiten Schritt ein genauerer Ort bestimmt wird, durch Lösen einer Gleichung, die einen Ausdruck für eine Interpolation der Amplitudenwerte entlang der Suchkurve als Funktion des genannten ersten Amplitudensprungs beinhaltet, wobei die Gleichung von Amplitudenwerten von zumindest drei auf oder entlang der betreffenden Suchkurve gelegenen Elementen abhängt.

2. Verfahren nach Anspruch 1, <u>dadurch gekennzeichnet</u>, daß die Gleichung von Amplitudenwerten von zumindest vier auf oder entlang der Suchkurve gelegenen Elementen abhängt.

3. Verfahren nach Anspruch 1 oder 2, <u>dadurch gekennzeichnet</u>, daß die Interpolation als Funktion von hintereinander entlang der Suchkurve gebildeten Summen bestimmt wird, wobei jede Summe zu einer festen Zahl von Amplitudenwerten von Elementen gehört, die entsprechend nahe der Suchkurve liegen, wobei die Elemente einander in einer Richtung quer zur Suchkurve folgen.

4. Verfahren nach einem der Ansprüche 1 bis 3, <u>dadurch gekennzeichnet</u>, daß für die Elemente Pixel eines zweidimensionalen Videobildes verwendet werden, wobei Grauwerte der Pixel die Amplitudenwerte bilden.

5. Verfahren nach einem der Ansprüche 1 bis 4, wobei das Feld von einem rechteckigen Array gebildet wird, <u>dadurch gekennzeichnet</u>, daß die Suchkurve so gewählt ist, daß sie sich in einer der Hauptrichtungen des Feldes erstreckt.

6. Verfahren nach einem der Ansprüche 1 bis 5, <u>dadurch gekennzeichnet</u>, daß der Ausdruck eine Angleichungskurve durch die betreffenden Amplitudenwerte ist.

7. Verfahren nach Anspruch 6, <u>dadurch gekennzeichnet</u>, daß für die Angleichungskurve ein Polynom dritter Ordnung benutzt wird, wobei die Gleichung erfordert, daß ein Wendepunkt des genannten Polynoms an dem Ort null ist.

8. Anordnung zum Ausführen des Verfahrens nach einem der Ansprüche 1 bis 7, wobei die Anordnung Speicherelemente zum Speichern von Amplitudenwerten von Elementen umfaßt, welche Speicherelemente mit einer Detektionsschaltung (DL) verbunden sind, <u>dadurch gekennzeichnet</u>, daß die Anordnung weiterhin eine Lokalisierungsschaltung (LL) mit einer Logikschaltung zum Berechnen des Ortes umfaßt.

9. Anordnung nach Anspruch 8, <u>dadurch gekennzeichnet</u>, daß die Logikschaltung eine Addierschaltung, einen ersten Festwertspeicher (ROM) mit einer Logarithmentafel sowie einen zweiten ROM mit einer Antilogarithmentafel umfaßt.

10. Videosystem mit einer Anordnung nach Anspruch 8 oder 9 für die wiederholte Detektion und weitere Lokalisierung von Amplitudensprüngen in einer Aufeinanderfolge von Videobildern, <u>dadurch gekennzeichnet</u>, daß Echtzeitdetektion von Sprüngen und weitere, diese Sprünge näher lokalisierende Lokalisierung erfolgen.

## Revendications

1. Procédé de détection de l'emplacement d'un saut d'amplitude dans un champ d'éléments représentant une image, ledit champ présentant une distribution d'amplitude à plusieurs valeurs, comprenant l'étape consistant à

   - comparer les valeurs d'amplitude d'éléments voisins sur une courbe de recherche pour déterminer un premier emplacement de saut d'amplitude

   caractérisé en ce que

   - au cours d'une deuxième étape, un emplacement plus précis est déterminé en résolvant une équation comportant une expression pour une interpolation des valeurs d'amplitude le long de la courbe de recherche en fonction dudit premier emplacement de saut d'amplitude, l'équation dépendant des valeurs d'amplitude d'au moins trois éléments situés sur ou le long de la courbe de recherche en question.

2. Procédé suivant la revendication 1, caractérisé en ce que l'équation dépend des valeurs d'amplitude d'au moins quatre éléments situés sur ou le long de la courbe de recherche.

3. Procédé suivant la revendication 1 ou 2, caractérisé en ce que l'interpolation est déterminée en fonction de sommes formées successivement le long de la courbe de recherche, chaque somme concernant un nombre fixe de valeurs d'amplitude d'éléments également situés près de la courbe de recherche, lesquels éléments se succèdent l'un l'autre dans une direction transversale à la courbe de recherche.

4. Procédé suivant l'une quelconque des revendications 1 à 3, caractérisé en ce que pour les éléments, on utilise des pixels d'une image vidéo bidimensionnelle, les niveaux de gris des pixels constituant les valeurs d'amplitude.

5. Procédé suivant l'une quelconque des revendications 1 à 4, le champ étant formé par une matrice rectangulaire, caractérisé en ce que la courbe de recherche est choisie pour s'étendre dans une des directions principales du champ.

6. Procédé suivant l'une quelconque des revendications 1 à 5, caractérisé en ce que l'expression est une courbe ajustée passant par les valeurs d'amplitude intéressantes.

7. Procédé suivant la revendication 6, caractérisé en ce que pour la courbe ajustée, on utilise un polynôme du troisième degré, l'équation requérant qu'un point d'inflexion dudit polynôme soit nul à l'emplacement.

8. Dispositif pour exécuter le procédé suivant l'une quelconque des revendications 1 à 7, le dispositif comprenant des éléments de stockage pour le stockage de valeurs d'amplitude d'éléments, lesquels éléments de stockage sont connectés à un circuit de détection (DL), caractérisé en ce que le dispositif comprend en outre un circuit de localisation (LL) comprenant un circuit logique pour calculer l'emplacement.

9. Dispositif suivant la revendication 8, caractérisé en ce que le circuit logique comprend un circuit additionneur, une première mémoire morte (ROM) contenant une table de logarithmes, et une deuxième ROM contenant une table d'antilogarithmes.

10. Système vidéo comprenant un dispositif suivant la revendication 8 ou 9 pour la détection et la localisation répétées de sauts d'amplitude dans une succession d'images vidéo, caractérisé en ce que la détection en temps réel de sauts et la localisation qui localisent ces sauts plus précisément ont lieu.

| 0 | 1 | 0 | 2 | 1 | 1 | 1 |
|---|---|---|---|---|---|---|
| 1 | 2 | 8 | 9 | 7 | 8 | 2 |
| 0 | 1 | 2 | 8 | 9 | 1 | 0 |
| 0 | 1 | 2 | 2 | 2 | 0 | 1 |

FIG.1

FIG.2A

FIG.2B

FIG.3

FIG.4

FIG. 5

FIG. 6

FIG. 7

FIG.8

FIG.9